# NOUVEAU FASCICULE DE BREVET EUROPEEN

(11) **EP 0 539 475 B2**
(45) Date de publication et mention de la décision concernant l'opposition: **13.12.2000**
(45) Mention de la délivrance du brevet: 20.09.1995
(21) Numéro de dépôt: 91913535.0
(22) Date de dépôt: 05.07.1991
(51) Int. Cl.: C08F 2/00, C08F 2/22, C09J 7/02, C23F 11/00

(54) **PROCEDE DE PREPARATION D'ADHESIFS EN EMULSION ET UTILISATION DES ADHESIFS OBTENUS PAR CE PROCEDE**
VERFAHREN ZUR HERSTELLUNG VON KLEBSTOFFEMULSIONEN UND VERWENDUNG DER DURCH DAS VERFAHREN HERGESTELLTEN KLEBSTOFFE
PREPARATION PROCESS OF EMULSIFIED ADHESIVES AND USE OF THE ADHESIVES OBTAINED BY THIS PROCESS

(30) Priorité: 06.07.1990 FR 9008638
(43) Date de publication de la demande: 05.05.1993
(73) Titulaire: NOVACEL, F-76250 Deville-les-Rouen (FR)
(72) Inventeur: ANTON, Patrice, F-76360 Villers-Ecalles (FR); MAYER, André, 8280 Kreutzlingen (CH)
(74) Mandataire: Gillard, Marie-Louise
(86) Numéro de dépôt international: FR9100545
(87) Numéro de publication internationale: WO9201004

(56) Documents cités:
- DE-A- 3 111 602
- FR-A- 2 189 426
- FR-A- 2 328 721
- US-A- 4 254 004
- "Minutes of the 40th Annual Meeting of the Japan Wood Research Society", Tsukuba (JP), April 1990, p. 142
- D.R. Bassett et al. "Nonuniform Emulsion Polymers, Process Description and Polymer Properties", American Chemical Society, 1981, ACS Symposium Series, 165, Washington, D.C., pp. 371-387

## Description

La présente invention a pour objets un procédé pour la préparation d'adhésifs en émulsion, des films enduits des adhésifs obtenus par ce procédé, et l'utilisation desdits films.

On a décrit dans la demande FR-A-2 328 721 un procédé de polymérisation en émulsion, selon la technique du "POWER FEED", pour la préparation de polymères. Ledit procédé permet de maîtriser la morphologie des particules et la distribution de la masse moléculaire des polymères obtenues. Lesdites particules de polymères peuvent présenter une partie centrale molle se modifiant progressivement jusqu'à une partie extérieure dure, ou inversement, une partie centrale dure se modifiant progressivement jusqu'à une partie externe molle. Ces polymères sont utilisés, en latex, à titre de revêtement ou peinture. Leur utilisation, dans le domaine des adhésifs n'est ni décrite, ni suggérée.

Le procédé de l'invention permet, lui, la préparation d'adhésifs, pour le collage (adhésivage) de films de polymères à la surface de métaux nus. Il s'agit, dans cette application particulière, de conférer auxdits métaux tel l'acier, une protection temporaire, efficace, en les recouvrant d'une pellicule de polyoléfine, tel que polyéthylène, polypropylène, copolymères EVA (éthylène-acétate de vinyle)... ou d'une pellicule de polychlorure de vinyle (PVC), de polyester, de polyamide, ...

Dans cette application, on recherche :
1. une tenue de la pellicule protectrice aux transformations du métal tel l'emboutissage ;
2. un pelage ou décachage aisé (on parle de "slip stick" pour l'adhésif) de ladite pellicule protectrice ;
3. une compatibilité de celle-ci avec les surfaces métalliques à protéger. Il convient qu'après retrait de la pellicule, on ne trouve pas de reliquat à la surface des métaux.

Les adhésifs de la présente invention, répondent à ce "cahier des charges", notamment avec des films de polyéthylène. L'utilisation de tels films ne donne pas, avec les adhésifs connus à ce jour, pleinement satisfaction, dans cette application.

Selon l'art antérieur on connaît, pour ce type d'application, l'utilisation de colles à base de caoutchouc en solution. Toutefois, le décachage de la pellicule, fixée avec de telles colles, n'est pas très facile et la tenue à l'emboutissage est très dépendante de la nature de ladite pellicule.

Dans la demande de brevet JP81/211 464 du 25 décembre 1981 (publiée le 4 juillet 1983 sous le n° 58/111 878), on décrit la préparation d'un adhésif, en solution.

Un tel procédé n'est guère avantageux, ni économiquement, ni écologiquement. L'adhésif obtenu ne donne, par ailleurs, pas pleinement satisfaction au niveau de décachage.

Dans le brevet BE 894 896, on décrit un procédé original de polymérisation en émulsion, pour la préparation d'un latex. Les particules dudit latex sont obtenues en deux étapes. Dans un premier temps, on en prépare le noyau - dur - puis, dans un deuxième temps, la paroi -moins dure-. Ledit latex permet notamment l'adhérence du polyéthylène à l'acier.

Selon l'invention, on propose donc un procédé de préparation d'adhésifs en émulsion, tel que défini dans la revendication 1.

Le paramètre Tg -température de transition vitreuse- est un paramètre couramment utilisé pour décrire la dureté des polymères. Il est défini par Flory "Principles of Polymer Chemistry", pp 56-57 (1953) et peut être mesuré selon une méthode décrite par Fox dans le Bull. Am. Physics Soc. 1, 3, p 123 (1956). D'autres méthodes de mesure ont été développées. Elles sont connues de l'homme de métier.

Les adhésifs de l'invention se sont, comme indiqué ci-dessus, révélés particulièrement performants pour le collage temporaire (adhésivage) de pellicules de polyoléfine (polyéthylène, polypropylène, copolymères EVA ...), de polyester, de polyamide ou polychlorure de vinyle sur des surfaces métalliques.

Dans cette application, on utilise avantageusement lesdits adhésifs de la manière suivante : on dépose sur la pellicule -la base- l'adhésif en émulsion, on sèche la base ainsi enduite. On obtient alors un film adhésif, un film enduit d'une fine couche d'adhésif. Cette couche a généralement une épaisseur comprise entre 40 et 100 µm.

De tels films adhésifs et leur utilisation notamment pour la protection de surfaces métalliques constituent d'autres objets de la présente invention.

On insistera sur le fait que des résultats très positifs ont été obtenus avec des films de polyoléfine et notamment de polyéthylène.

Selon l'invention, on propose également un nouveau procédé de préparation d'adhésifs en émulsion qui comprend, de façon classique, la copolymérisation de monomères, en présence d'un amorceur. Cette copolymérisation est généralement mise en oeuvre en émulsion aqueuse. L'homme de l'art connaît tous les avantages d'un adhésif en émulsion aqueuse, tant au niveau de sa préparation qu'au niveau de son utilisation. Toutefois, on n'écarte pas selon l'invention l'utilisation d'autres types d'émulsions, dans la mesure où les caractéristiques de celles-ci permettent la mise en oeuvre du procédé précisé ci-après.

Le procédé de copolymérisation de l'invention pour la préparation d'adhésifs en émulsion, avantageusement aqueuse, consiste à copolymériser, en émulsion, un mélange de monomères en présence d'un amorceur, mélange dont on fait varier au cours du temps en continu la composition pour générer des particules dont la Tg varie suivant le rayon.

Ledit procédé est caractérisé en ce que ladite copolymérisation est mise en oeuvre dans un réacteur alimenté de façon continue en monomères et en amorceur; l'alimentation en monomères se faisant à partir de deux réservoirs montés en série, le second desdits réservoirs débitant dans le premier qui, lui-même, débite dans ledit réacteur; ledit premier réservoir contenant un monomère (ou un mélange de monomères) qui présente en homopolymérisation (ou en copolymérisation) une Tg comprise entre 0 et 60°C et le monomère ou mélange de monomères du second réservoir étant constitue d'un monomère (ou d'un mélange de monomères) qui présente en homopolymérisation (ou en copolymérisation) une Tg inférieure à -10°C et de préférence comprise entre -20°C et -40°C.

Le procédé de l'invention permet la préparation de particules de copolymères dont la Tg décroit progressivement du centre vers la périphérie. De telles particules sont obtenues par copolymérisation en émulsion d'un mélange de monomères, mélange dont la composition varie au cours du temps.

Ledit mélange contient au moins deux monomères différents, deux monomères présentant en homopolymérisation une Tg différente.

Selon la principale caractéristique de l'invention, le réacteur de copolymérisation est alimenté en continu par un flux de monomères de composition non constante. Avantageusement, lesdits monomères sont émulsifiés.

La variation progressive de la composition du flux d'alimentation entraîne, le long du rayon des particules de polymères générèes, une variation progressive des caractéristiques de dureté.

Pour obtenir les particules dont la Tg décroît progressivement du centre vers la prériphérie, on modifie progressivement la composition du flux d'alimentation : celui-ci doit s'enrichir au fur et à mesure en monomère(s) présentant en homopolymérisation (copolymérisation) une Tg inférieure à celle du (ou des) monomère(s) intervenant en début de procédé.

On fera avantageusement en sorte d'obtenir des particules d'adhésifs, en suspension, dont la Tg externe (à la surface desdites particules) est inférieure à la température à laquelle on souhaite utiliser ledit adhésif.

Le procédé de l'invention est, de façon particulièrement avantageuse, mis en oeuvre pour la préparation d'ahésifs en émulsion, dont les particules de copolymères ont une Tg décroissante du centre vers la périphérie, la Tg "externe" étant inférieure à la température ambiante.

Les monomères, émulsifiés ou non, susceptibles d'intervenir dans le procédé de l'invention sont tous les monomères connus pour leur intervention dans les synthèses d'adhésifs, selon l'art antérieur. On citera, de façon nullement limitative, les monomères acryliques, les monomères méthacryliques, l'acrylamide, l'acétate de vinyle, l'acrylonitrile, le styrène, l'acide p-vinylbenzoïque, le méthacrylamide, le vinyltoluène, la vinylpyrrolidone, et leurs mélanges.

Parmi les monomères acryliques, on peut citer l'acide acrylique et les acrylates de méthyle, d'éthyle, d'hydroxyéthyle, de propyle, de butyle (n-butyle ou t-butyle), d'octyle (n-octyle, iso-octyle), de 2-éthylhexyle, de tétradécyle, de pentadécyle.

De la même façon, parmi les monomères méthacryliques, on peut citer l'acide méthacrylique et les méthacrylates de méthyle, d'éthyle, d'hydroxyéthyle, de butyle (n-butyle, t-butyle), d'octyle (n-octyle, iso-octyle), de n-décyle, de n-tétradécyle, de pentadécyle.

De façon plus générale, les monomères de formule :

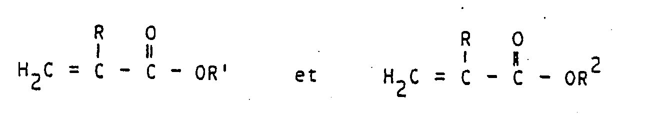

tels que définis dans le brevet US 3,740,366, sont utilisables aux fins de l'invention.

Le procédé de l'invention consiste donc en une copolymérisation classique de monomères en présence d'un amorceur (ou couple rédox), caractérisé en ce qu'il est mis en oeuvre,
avec modification de la composition du flux d'alimentation, impliquant une variation de la Tg le long du rayon des particules de copolymères générées.

L'amorceur utilisé est choisi parmi les composés connus pour assurer cette fonction dans les réactions de polymérisation radicalaire. Il peut notamment s'agir du persulfate d'ammonium ou de potassium. Ledit amorceur peut intervenir seul ou en combinaison avec un catalyseur tel que par exemple, le thiosulfate de sodium ou le métabisulfite de potassium. L'homme de l'art connaît les quantités dans lesquelles ledit amorceur et éventuellement ledit catalyseur doivent intervenir.

De la même façon, on fait intervenir dans le procédé de l'invention des émulsifiants connus pour intervenir dans les réactions de polymérisation en émulsion. Il peut s'agir :
- d'émulsifiants anioniques, tel le nonyl phénol éthoxylé sulfaté, le dodécyl sulfate de sodium, le laurate de potassium ;
- d'émulsifiants non ioniques, tels les alkyls phénol éthoxylés ;
- ou d'un mélange de ces deux types d'émulsifiants.

Des exemples de tels composés sont donnés dans le brevet US 3,740,366. Ils interviennent en quantité efficace.

Il est également possible d'utiliser dans le procédé de l'invention des transféreurs (ou agents de transfert) pour diminuer les masses moléculaires des copolymères synthétisés et augmenter le tack de l'adhésif ainsi préparé. On utilise généralement entre 0,01 à 2 % en poids de tels transféreurs, par rapport aux monomères. A titre d'exemple, on indique ici que le dodecyl mercaptan peut être utilisé à cette fin.

D'autres composés peuvent intervenir de façon classique dans le procédé de l'invention, par exemple un tampon pour maintenir le pH du milieu réactionnel.

La température du réacteur est maintenue à une température classique pour ce type de polymérisation : 60 à 80°C, de préférence 70 à 75°C.

La copolymérisation de l'invention est mise en oeuvre dans un réacteur alimenté de façon continue, en amorceur et en monomères, l'alimentation en monomères se faisant à partir de deux réservoirs, montés en série contenant chacun au moins un monomère différent ; le second desdits réservoirs débitant dans le premier qui, lui-même, débite dans ledit réacteur.

Une telle alimentation du réacteur de copolymérisation est dite "POWER FEED".

Avantageusement, lesdits premier et second réservoirs contiennent chacun une émulsion différente de monomères.

Au démarrage de la réaction (t = 0), chacun desdits réservoirs contient au moins un monomère, présentant en homopolymérisation une Tg différente. Il peut contenir un mélange de monomères, présentant en copolymérisation une Tg différente. En cours de réaction, le réacteur est alimenté en continu par le premier réservoir dans lequel débite en continu le second réservoir.

L'homme de l'art conçoit aisément qu'il est ainsi possible d'obtenir le résultat recherché -variation de la Tg le long du rayon des particules de copolymères obtenues- en maîtrisant les paramètres énoncés ci-après :
- composition des réservoirs d'alimentation (chaque réservoir peut être caractérisé par la Tg des particules qui seraient obtenues, en homopolymérisation (s'il contient un seul type de monomères) ou en copolymérisation (s'il contient plusieurs monomères) à partir des monomères qu'il contient).
- débits de transfert du second réservoir dans le premier et dudit premier réservoir dans le réacteur de copolymérisation.

Ainsi, pour obtenir des particules de l'invention dont la Tg décroît du centre vers la périphérie, l'alimentation du réacteur sera telle que les copolymères générés présentent une Tg, fonction décroissante du temps.

Selon le procédé de l'invention, au démarrage de la réaction de copolymérisation :
- le premier réservoir, appelé à débiter directement dans le réacteur, contient un monomère (ou un mélange de monomères) qui présente en homopolymérisation (ou en copolymérisation) une Tg comprise entre 0 et 60°C,
- le monomère ou mélange de monoères du second réservoir, appelé à débiter dans ledit premier réservoir, est constitué d'un monomère (ou d'un mélange de monomères), qui présente en homopolymérisation (ou en copolymérisation) une Tg inférieure à -10°C, et de préférence comprise entre -20°C et -40°C.

Dans un réacteur de polymérisation, alimenté en "power feed" à partir de ces deux réservoirs, on prépare, selon l'invention, des particules de copolymères, en émulsion, dont la Tg décroît progressivement du centre vers la périphérie.

Avantageusement, au démarrage de la réaction, les monomères dudit premier réservoir et dudit second réservoir interviennent dans des proportions pondérales comprises entre 1 pour 10 et 10 pour 1.

Avantageusement, afin de maîtriser la variation de la Tg dans les gammes souhaitées, les monomères dudit premier réservoir sont choisis parmi le styrène, le méthacrylate de méthyle, l'acrylonitrile, l'acétate de vinyle, l'acide acrylique, l'hydroxyéthyl(métha)acrylate ou leurs mélanges; les monomères dudit second réservoir sont choisis parmi l'acrylate de butyle, l'acrylate de 2-éthylhexyle, l'acrylate d'iso-octyle, l'acrylate d'octyle ou leurs mélanges.

Comme précisé ci-dessus, le procédé de l'invention permet la préparation de particules de copolymères dont la Tg varie suivant le rayon; plus précisement la préparation de particules de copolymères dont la Tg décroît progressivement suivant le rayon.

L'invention va maintenant être illustrée par les figures jointes et exemples ci-après.

Sur la figure 1, on a schématisé un dispositif pour la mise en oeuvre du procédé de l'invention.

Sur les figures 2 et 3, on a reporté des courbes d'ATD (Analyse Thermique Différentielle) caractérisant des particules de copolymères. La courbe de la figure 2 caractérise des particules obtenues selon un procédé de synthèse classique, la courbe de la figure 3, des particules obtenues selon une variante du procédé de l'invention.

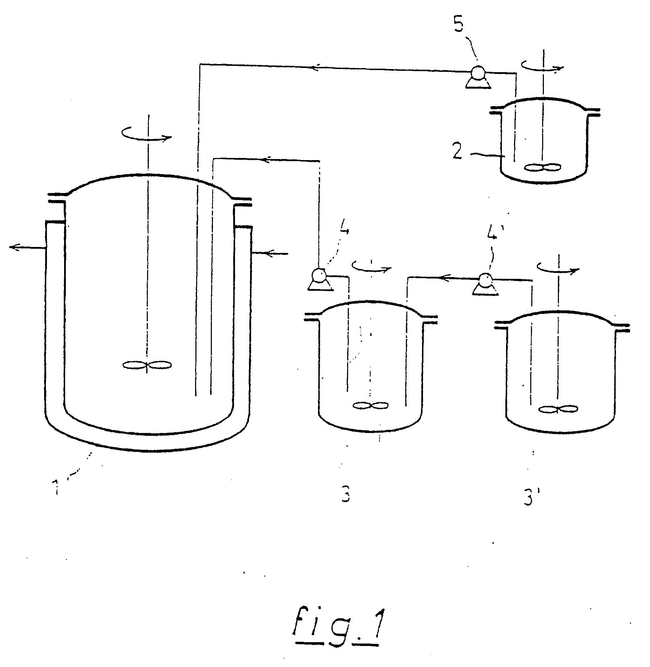

Sur la figure 1, on a schématisé en (1) le réacteur de copolymérisation, en (2) le réservoir d'amorceur, en (3) et (3') les réservoirs de monomères. La pompe (4) assure l'alimentation du réacteur en monomères généralement émulsifiés, la pompe (5), son alimentation en amorceur. La pompe (4') assure le transfert des monomères contenus dans le réservoir (3') vers le réservoir (3).

Un tel dispositif permet de faire varier, au cours du temps, la composition du flux d'alimentation du réacteur de copolymérisation (1), dans la mesure où les monomères (ou mélanges de monomères) contenus dans les deux réservoirs (3) (3') présentent en homopolymérisation (ou en copolymérisation) une Tg différente.

On décrit ci-après une synthèse d'adhésif selon l'art antérieur.

Elle est mise en oeuvre à partir d'une solution aqueuse d'amorceur et d'une unique émulsion aqueuse de monomères.

La composition globale de monomères utilisée répond à la formulation ci-après (% en poids, Tg -20°C) :

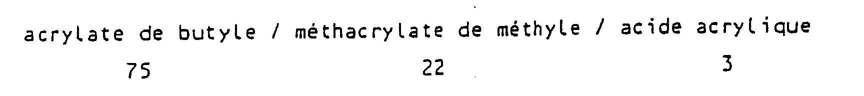

La synthèse est mise en oeuvre dans un réacteur alimenté d'une part en amorceur, d'autre part en monomères, à partir d'un unique réservoir de monomères.

Ledit réservoir de monomères contient :

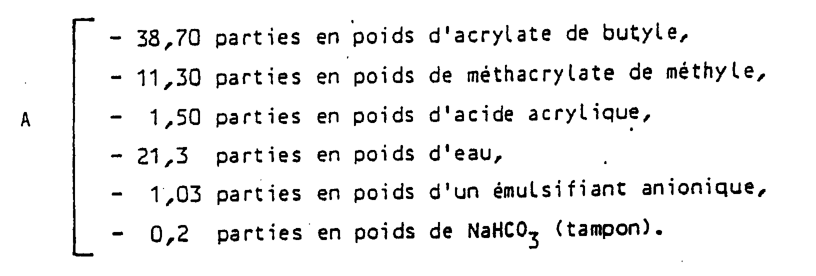

Le réacteur contient initialement :
- 19,40 parties en poids d'eau,
- 0,02 parties en poids de K₂S₂O₈ (amorceur).

La réserve d'amorceur contient initialement :

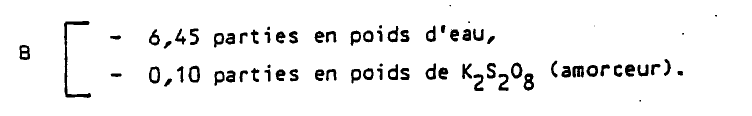

L'addition de A et B dans le réacteur se fait en trois heures. La température du réacteur est maintenue à 72°C pendant ces trois heures, elle est ensuite portée à 85°C afin d'éliminer les monomères résiduels.

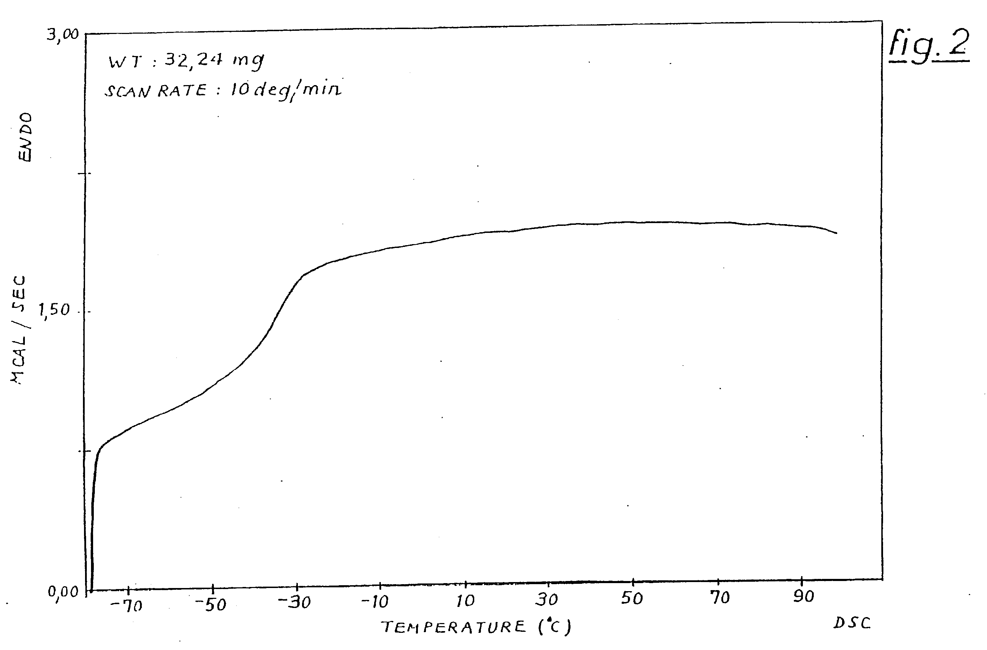

Les particules de copolymères obtenues présentent en ATD (Analyse Thermique Différentielle) le spectre de la figure 2. Ledit spectre se caractérise par une zone étroite de Tg.

On décrit ci-après des synthèses d'adhésifs, selon l'invention ; synthèses en "power feed", caractérisées par une variation de la composition d'alimentation en monomères. On se référe au dispositif de la figure 1.
1) La composition globale des monomères utilisés répond à la formulation ci-après (% en poids) : 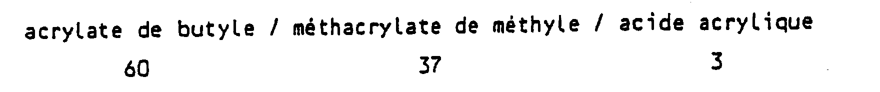
   Les monomères sont répartis entre les réservoirs (3) et (3'). Ledit réservoir (3) contient :
   - 12,78 parties en poids d'eau,
   - 0,62 parties en poids d'un émulsifiant anionique,
   - 0,12 parties en poids de NaHCO₃ (tampon),

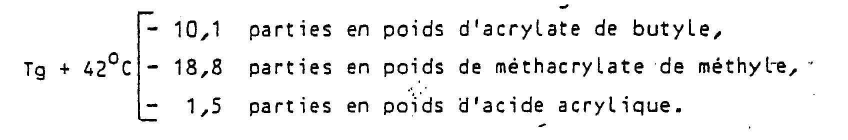

   Ledit réservoir (3') contient :
   - 8,52 parties en poids d'eau,
   - 0,41 parties poids d'un émulsifiant anionique,
   - 0,08 parties en poids de NaHCO₃ (tampon),
   Tg≃ -40°C - 21 parties en poids d'acrylate de butyle

   Le réservoir (2) contient :
   - 6,45 parties en poids d'eau,
   - 0,10 parties en poids de K₂S₂O₈ (amorceur).

   Le réacteur (1) contient initialement :
   - 19,40 parties en poids d'eau,
   - 0,02 parties en poids de K₂S₂O₈ (amorceur).

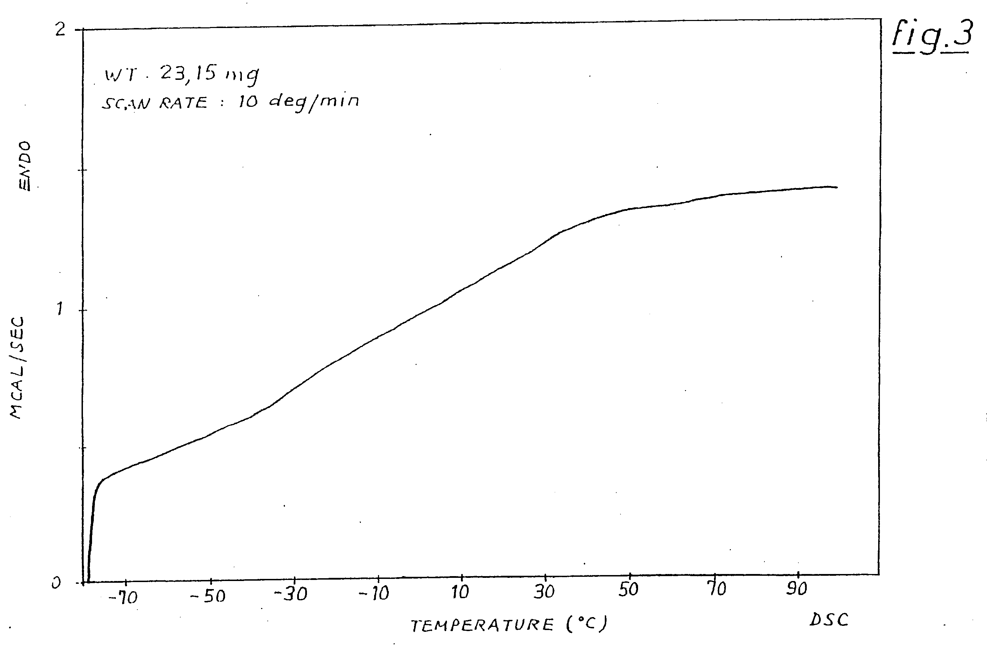

   Les vitesses d'addition au niveau des pompes (4) et (4') sont respectivement de 0,41 partie en poids/minute et de 0,17 partie en poids/minute.
   Les particules d'adhésif obtenues se caractérisent par une zone étendue de Tg, mise en évidence sur la figure 3.
2) La composition globale des monomères utilisés répond à la formulation (% en poid 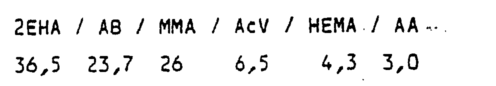 s) :

La composition globale des monomères de la pré-émulsion dans le réservoir (3) répond à la formulation (% en poids) :

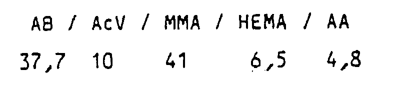

La Tg de ce mélange (en copolymérisation) est de 20°C.

On ne trouve que des monomères de 2EHA dans le réservoir (3') (Tg_{2EHA} = -45°C en homopolymérisation). On précise :
- 2EHA: = acrylate de 2-éthylehexyle
- AB: = acrylate de butyle
- MMA: = méthyl-méthacrylate
- AcV: = acétate de vinyle
- HEMA: = hydroxyéthyl-méthacrylate
- AA: = acide acrylique

Le réacteur (1) contient initialement :
- 19,78 parties en poids d'eau,
- 0,02 parties en poids de K₂S₂O₈.

Le réservoir (2) contient initialement :
- 6,45 parties en poids d'eau,
- 0,14 parties en poids de K₂S₂O₈.

Le réservoir (3) contient initialement :
- 12,78 parties en poids d'eau,
- 0,62 parties en poids d'émulsifiant anionique,
- 0,12 parties en poids de NaHCO₃ (tampon),
- 19,4 parties en poids d'acrylate de butyle,
- 5,1 parties en poids d'acétate de vinyle,
- 21,1 parties en poids de méthacrylate de méthyle,
- 3,3 parties en poids d'hydroxyéthylméthacrylate,
- 2,4 parties en poids d'acide acrylique.

Le réservoir (3') contient initialement :
- 8,52 parties en poids d'eau,
- 0,41 parties en poids d'émulsifiant anionique,
- 0,08 parties en poids de NaHCO₃ (tampon),
- 21 parties en poids de 2-éthylhexylacrylate.

La température du réacteur est amenée à 72°C. Ledit réacteur est purgé pendant 10 mm à l'azote.

On ajoute alors les mélanges des réservoirs (3) et (3') en continu pendant 3 à 4 heures. La solution d'amorceur est, elle, ajoutée en 4 à 5 h. Les additions de monomères et amorceur étant terminées, on maintient la température jusqu'à ce que le taux de monomères résiduels soit inférieur à 0,5 %.

Les particules d'adhésifs obtenues se caractérisent également par une zone étendue de Tg.

## Revendications

1. Procédé pour la préparation d'un adhésif en émulsion, constitué de particules de copolymère dont la Tg décroit progressivement du centre vers la périphérie, entre deux valeurs comprises entre + 60°C et - 50°C, de préférence entre + 60°C et - 30°C, par copolymérisation en émulsion d'un mélange de monomères en présence d'un amorceur, mélange dont on fait varier en continu au cours de ladite polymérisation la composition, ladite copolymérisation étant mise en oeuvre dans un réacteur alimenté de façon continue en monomères et en amorceur, l'alimentation en monomères se faisant à partir de deux réservoirs montés en série, le second desdits réservoirs débitant dans le premier qui, lui-même, débite dans ledit réacteur, ledit premier réservoir contenant un monomère (ou un mélange de monomères) qui présente en homopolymérisation (ou en copolymérisation) une Tg comprise entre 0 et 60°C et le monomère ou mélange de monomère du second réservoir étant constitué d'un monomère (ou d'un mélange de monomères) qui présente en homopolymérisation (ou en copolymérisation) une Tg inférieure à - 10 °C et de préférence comprise entre -20 °C et -40 °C.

2. Procédé selon la revendication 1, dans lequel lesdits monomères sont choisis parmi les monomères acryliques, tels que l'acide acrylique, les acrylates de méthyle, d'éthyle, d'hydroxyéthyle, de propyle, de butyle, d'octyle, de 2-éthylhexyle, de tétradécyle ou de pentadécyle; les monomères méthacryliques tels que l'acide méthacrylique, les méthacrylates de méthyle, d'éthyle, d'hydroxyéthyle, de butyle, d'octyle, de n-décyle, de n-tétradécyle ou de pentadécyle ; l'acrylamide ; l'acétate de vinyle ; l'acrylonitrile ; le styrène ; l'acide p-vinylbenzoïque ; le méthacrylamide ; le vinyltoluène ; la vinylpyrrolidone ; et leurs mélanges.

3. Procédé selon la revendication 1 ou 2, dans lequel, au démarrage, les monomères dudit premier réservoir et dudit second réservoir interviennent dans des proportions pondérales comprises respectivement entre 1 pour 10 et 10 pour 1.

4. Procédé selon l'une des revendications 1 a 3, dans lequel, au démarrage, ledit premier réservoir, appelé à débiter directement dans ledit réacteur, contient du styrène, du méthacrylate de méthyle, de l'acrylonitrile, de l'acétate de vinyle, de l'acide acrylique, du (méth)acrylate d'hydroxyéthyle ou un mélange de ces monomères ; tandis que ledit second réservoir, appelé à débiter dans ledit premier réservoir, contient de l'acrylate de butyle, de l'acrylate de 2-éthylhexyle, de l'acrylate d'iso-octyle, de l'acrylate d'octyle ou un mélange de ces monomères.

5. Film adhésif, qui consiste en une base enduite d'un adhésif obtenu selon le procédé de la revendication 1.

6. Film adhésif selon la revendication 5, dans lequel ladite base est une pellicule de polyoléfine, de polychlorure de vinyle, de polyester ou de polyamide.

7. Utilisation d'un film adhésif selon la revendication 5 ou 6 pour la protection de surfaces métalliques.

## Claims

1. A process for the preparation of an adhesive in the form of emulsion, consisting of particles of copolymers whose Tg decreases gradually from the centre towards the periphery, between two values of between +60°C and -50°C, preferably between two values of between +60°C and -30°C, by emulsion copolymerization of a mixture of monomers in the presence of an initiator, a mixture whose composition is varied continuously in the course of the said polymerization, the said copolymerization being carried out in a reactor fed continuously with the monomers and with the initiator, the monomer feeding taking place from two tanks arranged in series, the second of the said tanks delivering into the first which, itself, delivers into the said reactor ; the said first tank containing a monomer (or a mixture of monomers) which exhibits upon homopolymerization (or upon copolymerization) a Tg of between 0 and 60°C, and the monomer or mixture of monomers of the said second tank consisting of a monomer (or a mixture of monomers) which exhibits upon homopolymerization (or upon copolymerization) a Tg lower than -10°C and preferably between -20°C and -40°C.

2. A process according to claim 1, wherein the said monomers are chosen from acrylic monomers such as acrylic acid, methyl, ethyl, hydroxyethyl, propyl, butyl, octyl, 2-ethylhexyl, tetradecyl and pentadecyl acrylates ; methacrylic monomers such as methacrylic acid and methyl, ethyl, hydroxyethyl, butyl, octyl, n-decyl, n-tetradecyl and pentadecyl methacrylates ; acrylamide vinyl acetate ; acrylonitrile ; styrene ; p-vinylbenzoic acid ; methacrylamide ; vinytoluene ; vinylpyrrolidone; and mixtures thereof.

3. The process according to claim 1 or 2, wherein at the start, the monomers from the said first tank and from the said second tank are used in weight proportions which are between 1 to 10 and 10 to 1 respectively.

4. The process according to one of claims 1 to 3, wherein at the start, the said first tank, intended to deliver directly into the said reactor, contains styrene, methyl methacrylate, acrylonitrile, vinyl acetate, acrylic acid, hydroxyethyl(meth)acrylate or a mixture of these monomers, whereas the said second tank, intended to deliver into the said first tank contains butyl acrylate, 2-ethylhexyl acrylate, isooctyl acrylate, octyl acrylate or a mixture of these monomers.

5. Adhesive film, consisting of a base coated with an adhesive obtained according to the process of claim 1.

6. Adhesive film according to claim 5, wherein the said base is a film of polyolefin, of polyvinyl chloride, of polyester or of polyamide.

7. Use of the adhesive film according to claim 5 or 6 for the protection of metal surfaces.

## Patentansprüche

1. Verfahren zur Herstellung eines Emulsionsklebstoffs, der aus Copolymerpartikeln besteht, bei denen die Glasübergangstemperatur Tg des Copolymers allmählich vom Mittelpunkt zum Rand hin zwischen zwei Werte im Bereich von +60°C bis -50°C vorzugsweise von +60°C bis-30°C, abnimmt, durch Emulsionscopolymerisation eines Monomerengemischs, dessen Zusammensetzung während der Polymerisation kontinuierlich verändert wird, in Gegenwart eines Initiators, wobei die Copolymerisation in einem Reaktor durchgeführt wird, der kontinuierlich mit den Monomeren und dem Initiator versorgt wird, wobei die Versorgung mit den Monomeren aus zwei hintereinander angeordneten Behältern erfolgt, von denen der zweite Behälter in den ersten Behälter mündet, der selbst in den Reaktor mündet, wobei der erste Behälter ein Monomer (oder ein Monomerengemisch) enthält, das bei Homopolymerisation (oder Copolymerisation) eine Glasübergangstemperatur Tg von 0 bis 60°C ergibt, und wobei das Monomer oder das Monomerengemisch in dem zweiten Behälter aus einem Monomer (oder Monomerengemisch) besteht, das bei Homopolymerisation (oder Copolymerisation) eine Glasübergangstemperatur Tg unter -10°C, vorzugsweise ein Tg im Bereich von -20 bis -40°C, ergibt.

2. Verfahren nach Anspruch 1, wobei die Monomere ausgewählt sind unter Acrylmonomeren, wie Acrylsäure, Methyl-, Ethyl-, Hydroxyethyl-, Propyl-, Butyl-, Octyl-, 2-Ethylhexyl-, Tetradecyl- und Pentadecylacrylat, Methacrylmonomeren, wie Methacrylsäure, Methyl-, Ethyl-, Hydroxyethyl-, Butyl-, Octyl-, n-Decyl-, n-Tetradecyl- und Pentadecylmethacrylat, Acrylamid, Vinylacetat, Acrylnitril, Styrol, p-Vinylbenzoesäure, Methacrylamid, Vinyltoluol, Vinylpyrrolidon und Gemischen dieser Monomere.

3. Verfahren nach Anspruch 1 oder 2, wobei zu Beginn die Monomeren des ersten Behälters und die Monomeren des zweiten Behälters in einem Gewichtsverhältnis von 1:10 bis 10:1 eingesetzt werden.

4. Verfahren nach einem der Ansprüche 1 bis 3, wobei zu Beginn der erste Behälter, der unmittelbar in den Reaktor mündet, Styrol, Methylmethacrylat, Acrylnitril, Vinylacetat, Acrylsäure, Hydroxyethyl(meth)acrylat oder ein Gemisch dieser Monomeren enthält, während der zweite Behälter, der in den ersten Behälter mündet, Butylacrylat, 2-Ethylhexylacrylat, Isooctylacrylat, Octylacrylat oder ein Gemisch dieser Monomeren enthält.

5. Klebefolie, die aus einem Träger besteht, der mit einem nach dem Verfahren von Anspruch 1 hergestellten Klebstoff bestrichen ist.

6. Klebefolie nach Anspruch 5, wobei der Träger eine Folie aus einem Polyolefin, Polyvinylchlorid, Polyester oder Polyamid ist.

7. Verwendung der Klebefolie nach einem der Ansprüche 5 und 6 für den Schutz metallischer Oberflachen.
